# EUROPEAN PATENT APPLICATION

(11) **EP 4 738 565 A1**
(43) Date of publication of application: **06.05.2026**
(21) Application number: 25189663.5
(22) Date of filing: 15.07.2025
(51) Int. Cl.: H01M 50/209, H01M 50/211, H01M 50/242, H01M 50/249, H01M 50/548, H01M 50/55, H01M 50/553

(54) **BATTERY MODULE**

(30) Priority: 31.10.2024 KR 20240151708
(71) Applicant: SAMSUNG SDI CO., LTD., Yongin-si, Gyeonggi-do 17084 (KR)
(72) Inventor: KIM, Bum Rae, 17084 Yongin-si (KR); KIM, Da Hyun, 17084 Yongin-si (KR)
(74) Representative: Maiwald GmbH

(57) **Abstract**

A battery module includes an electrode assembly (20) including a first electrode plate (22), a second electrode plate (24), and a separator (26), a case (30) accommodating the electrode assembly (20), and a deformation prevention part (50) having a substantially similar geometry to a periphery of the case (30), the deformation prevention part (50) surrounding the periphery of the case (30), thereby forming a unit module (10). Because a facing distance between internal components of a secondary battery is kept uniform, the charging and discharging efficiency of the secondary battery is improved, and the lifespan of the secondary battery is prolonged.

## Description

### BACKGROUND

### 1. Field

The present disclosure relates to a battery module.

### 2. Description of the Related Art

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the disclosure and therefore it may contain information that does not constitute prior art.

### SUMMARY

The present disclosure provides a battery module preventing a facing distance between battery cells becoming non-uniform due to change in volume occurring during operation of a lithium-ion battery and resultant deformation of the cells.

In addition, the present disclosure provides a battery module capable of maintaining a uniform facing distance between cells, thereby suppressing growth of lithium salt and reducing deterioration in performance of a battery and the risk of short circuit.

In addition, the present disclosure provides a battery module suppressing deformation of a case.

However, the technical problems to be achieved in the embodiment of the disclosure are not limited to the technical problems mentioned above, and other technical problems not mentioned herein will be clearly understood from the following description by those skilled in the art to which the disclosure belongs.

Embodiments of the present disclosure provide battery module including an electrode assembly including a first electrode plate, a second electrode plate, and a separator, a case accommodating the electrode assembly, and a deformation prevention part mounted in a shape surrounding the periphery of the case to suppress deformation of the case.

Embodiments of the present disclosure provide a battery module, including: an electrode assembly including a first electrode plate, a second electrode plate, and a separator; a case accommodating the electrode assembly; and a deformation prevention part having a substantially similar geometry to a periphery of the case, the deformation prevention part surrounding the periphery of the case, thereby forming a unit module.

In some embodiments, the case may be mounted inside the deformation prevention part to form a unit module.

In some embodiments, the unit module may be provided in plural, and the plurality of unit modules may be consecutively arranged in a width direction.

In some embodiments, the battery module includes a plurality of the unit modules, wherein the plurality of the unit modules is consecutively arranged in a lateral direction.

In some embodiments, the battery module may include a housing accommodating the plurality of unit modules and including two opposite open sides and an end cover coupled to each of the two opposite open sides of the housing and being electrically connected to the electrode assembly.

In some embodiments, the battery module further includes: a housing accommodating the plurality of the unit modules, the housing comprising two opposite open sides; and two end covers each coupled to each of the two opposite open sides, each of the two end covers electrically connected to the electrode assembly.

In some embodiments, the case may be formed as a soft film.

In some embodiments, the case is a soft film.

In some embodiments, the battery module may further include a first electrode lead protruding from one side of the case in a longitudinal direction and a second electrode lead protruding from the other side of the case in the longitudinal direction.

In some embodiments, the deformation prevention part may include a first body part covering an upper side and a lower side of the case and the side of the case in the longitudinal direction connected to the first electrode lead and a first cover detachably mounted to the first body part so as to cover the other side of the case in the longitudinal direction connected to the second electrode lead.

In some embodiments, the deformation prevention part includes: a first body part covering an upper side and a lower side of the case and the one side of the case in the longitudinal direction connected to the first electrode lead; and a first cover detachably mounted to the first body part, the first cover covering the opposite side of the case in the longitudinal direction connected to the second electrode lead.

In some embodiments, the deformation prevention part may further include a first front cover coupled to at least one of the first body part or the first cover and located on a front surface of the case and a first rear cover coupled to at least one of the first body part or the first cover and located on a rear surface of the case.

In some embodiments, the deformation prevention part further includes: a first front cover coupled to the first body part or the first cover, the first front cover located on a front surface of the case; and a first rear cover coupled to the first body part or the first cover, the first rear cover located on a rear surface of the case.

In some embodiments, the first front cover and the first rear cover may include an insulative material.

In some embodiments, both the first front cover and the first rear cover comprise an insulative material.

In some embodiments, the first front cover and the first rear cover may have shapes corresponding to the shape of the case.

In some embodiments, both the first front cover and the first rear cover have geometries corresponding to a geometry of the case.

In some embodiments, the first body part may include a first fixed body formed in a shape covering the upper side of the case and the side of the case in the longitudinal direction connected to the first electrode lead and a first movable body rotatably mounted to the first fixed body so as to open the lower side of the case through rotation thereof.

In some embodiments, the first body part includes: a first fixed body covering the upper side of the case and the one side of the case in the longitudinal direction connected to the first electrode lead; and a first movable body hingedly mounted to the first fixed body.

Embodiments of the present disclosure provide a battery module including an electrode assembly including a first electrode plate, a second electrode plate, and a separator, a case accommodating the electrode assembly, a first electrode lead electrically connected to the first electrode plate and protruding outside the case, a second electrode lead electrically connected to the second electrode plate and protruding in the same direction as the first electrode lead, and a deformation prevention part mounted in a shape surrounding the periphery of the case to suppress deformation of the case while allowing the first electrode lead and the second electrode lead to protrude outside the deformation prevention part.

Embodiments of the present disclosure a battery module including: an electrode assembly including a first electrode plate, a second electrode plate, and a separator; a case accommodating the electrode assembly; a first electrode lead electrically connected to the first electrode plate and protruding externally relative to the case; a second electrode lead electrically connected to the second electrode plate and protruding in substantially a same direction relative to the first electrode lead; and a deformation prevention part having a substantially similar geometry to a periphery of the case, the deformation prevention part surrounding the periphery of the case.

In some embodiments, the case is located interior of the deformation prevention part, thereby forming a unit module.

In some embodiments, the deformation prevention part may include a second body part covering an upper side and a lower side of the case and one side of the case in a longitudinal direction and a second cover detachably mounted to the second body part so as to cover the other side of the case in the longitudinal direction connected to the first electrode lead and the second electrode lead.

In some embodiments, the deformation prevention part includes: a second body part covering an upper side and a lower side of the case and one side of the case in a longitudinal direction; and a second cover detachably mounted to the second body part, the second cover covering an opposite side of the case in the longitudinal direction connected to the first electrode lead and the second electrode lead.

In some embodiments, the second cover may include a cover body having holes formed therein so as to allow the first electrode lead and the second electrode lead to pass therethrough and extending in an upward-downward direction and a wing member extending obliquely from each of an upper side and a lower side of the cover body so as to be in contact with the second body part.

In some embodiments, the second cover includes: a cover body extending in a vertical direction and having holes allowing both the first electrode lead and the second electrode lead to pass through; and a wing member extending from an upper side or a lower side of the cover body, the wing member in contact with the second body part.

In some embodiments, the deformation prevention part may further include a second front cover coupled to at least one of the second body part or the second cover and located on a front surface of the case and a second rear cover coupled to at least one of the second body part or the second cover and located on a rear surface of the case.

In some embodiments, the deformation prevention part further includes: a second front cover coupled to the second body part or the second cover, the second front cover located on a front surface of the case; and a second rear cover coupled to the second body part or the second cover, the second rear cover located on a rear surface of the case.

In some embodiments, the second front cover and the second rear cover may include an insulative material.

In some embodiments, both the second front cover and the second rear cover comprise an insulative material.

In some embodiments, the second front cover and the second rear cover may have shapes corresponding to the shape of the case.

In some embodiments, both the second front cover and the second rear cover have geometries corresponding to a geometry of the case.

In some embodiments, the second body part may include a second fixed body formed in a shape covering the upper side of the case and one side of the case in the longitudinal direction and a second movable body rotatably mounted to the second fixed body so as to open the lower side of the case through rotation thereof.

In some embodiments, the second body part includes: a second fixed body covering the upper side of the case and the one side of the case in the longitudinal direction; and a second movable body hingedly mounted to the second fixed body.

In some embodiments, the battery module includes a plurality of the unit modules, wherein the plurality of the unit modules is consecutively arranged in a lateral direction.

In some embodiments, the battery module further includes: a housing accommodating the plurality of the unit modules, the housing comprising an open side; and an end cover coupled to the open side, the end cover electrically connected to the electrode assembly.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings:
FIG. 1 is an exploded perspective view of a battery module according to an embodiment of the present disclosure;
FIG. 2 is an exploded perspective view of a unit module according to an embodiment of the present disclosure;
FIG. 3 is a coupled perspective view of the unit module according to an embodiment of the present disclosure;
FIG. 4 is a front cross-sectional view of an electrode assembly and a case according to an embodiment of the present disclosure;
FIG. 5 is a front view showing the case exposed forward in the unit module according to an embodiment of the present disclosure;
FIG. 6 is a front view showing a first cover and a first movable body moved according to an embodiment of the present disclosure;
FIG. 7 is an exploded perspective view of a unit module according to an embodiment of an present disclosure;
FIG. 8 is a coupled perspective view of the unit module according to an embodiment of an present disclosure;
FIG. 9 is a front view showing a case exposed forward in the unit module according to an embodiment of the present disclosure;
FIG. 10 is a front view showing a second cover and a second movable body moved according to an embodiment of the present disclosure;
FIGS. 11A and 11B are perspective views showing a battery pack including a secondary battery according to an embodiment of the present disclosure; and
FIGS. 12A and 12B are, respectively, a perspective view and a side view showing a vehicle including a battery pack according to an embodiment of the present disclosure.

### DETAILED DESCRIPTION OF EXEMPLARY EMBODIMENTS

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. Modifications and variations to the embodiments described herein may be made without departing from the scope of the invention as defined in the appended claims. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the disclosure, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

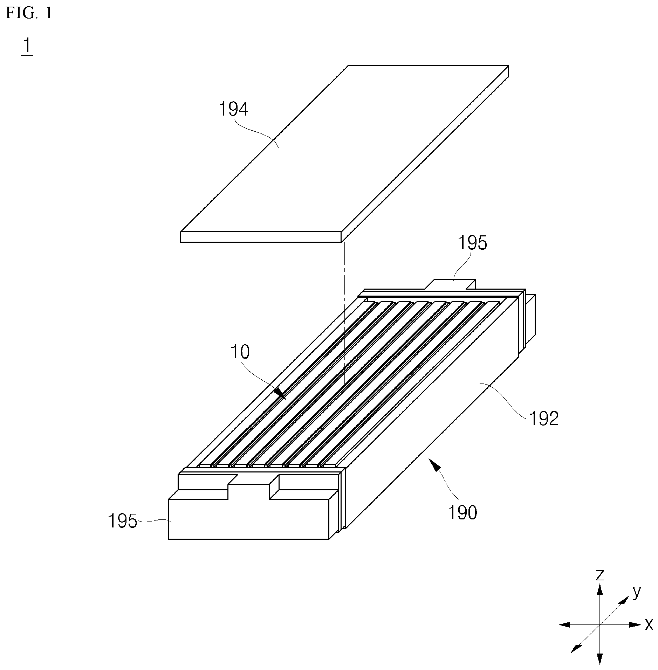

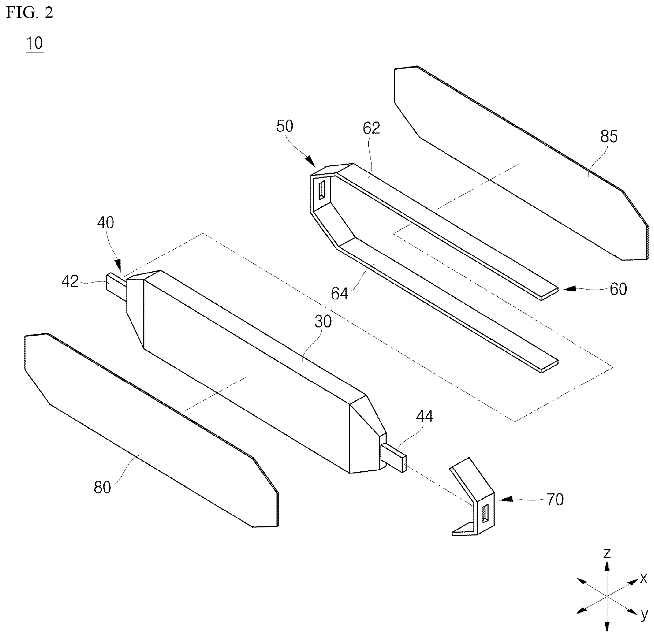

FIG. 1 is an exploded perspective view of a battery module 1 according to an embodiment of the present disclosure. As shown in FIG. 1, the battery module 1 may include a unit module 10, a housing 190, and an end cover 195. An electrode assembly 20 and a case 30 may form a secondary battery. The case 30 may accommodate the electrode assembly 20, and may be coupled to a deformation prevention part 50 (see FIG. 2) to form the unit module 10. The deformation prevention part 50 may be mounted in a shape surrounding the outer side of the case 30, and may protect the case 30 from external impact, thereby preventing deformation of the case 30.

The case 30 may be mounted inside the deformation prevention part 50 to form the unit module 10. The unit module 10 may include the case 30, the electrode assembly 20, and the deformation prevention part 50. The unit module 10 may be formed in a substantially rectangular parallelepiped geometry, and may extend in a longitudinal direction y. The unit module 10 may be provided in plural, and the plurality of unit modules 10 may be consecutively arranged in a laterial direction x. When mounted in the housing 190, the plurality of unit modules 10 may be arranged in the lateral direction x of the housing 190. The plurality of unit modules 10 may be mounted side by side parallel to each other.

The housing 190 may be formed in various shapes, so long as the housing 190 is capable of accommodating the unit modules 10 and is open on both sides thereof. The housing 190 may include a housing body 192 and a housing cover 194. The housing body 192 may have an inner space defined therein to accommodate the unit modules 10, and may be open on an upper side thereof. In some embodiments, the housing body 192 may be open on both sides thereof in the longitudinal direction y. The housing 190 may extend in the longitudinal direction y. The housing cover 194 may have a substantially rectangular plate geometry, and may configured to open and close the upper side of the housing body 192.

The end cover 195 may be formed in various geometries, so long as the end cover 195 is capable of being coupled to each of both sides of the housing 190 and electrically connected to the electrode assembly 20. The end cover 195 may be mounted on each of one side and the other side of the housing 190 in the longitudinal direction y.

As used herein, the longitudinal direction may be referred to as a first direction or may be indicated by "y". The lateral direction may be referred to as a second direction or may be indicated by "x". The vertical direction may be referred to as a third direction or may be indicated by "z".

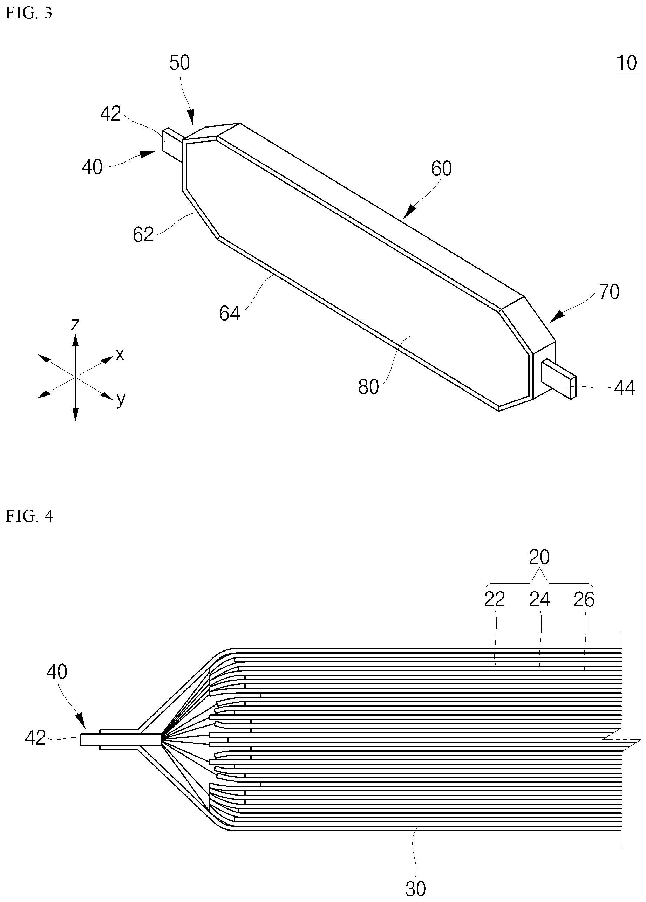

FIG. 4 is a front cross-sectional view of the electrode assembly 20 and the case 30 according to an embodiment of the present disclosure. As shown in FIG. 4, the electrode assembly 20 may include a first electrode plate 22, a second electrode plate 24, and a separator 26.

The electrode assembly 20 may be accommodated in a pouch together with an electrolyte. The electrolyte may include an organic solvent such as ethylene carbonate (EC), propylene carbonate (PC), diethyl carbonate (DEC), ethyl methyl carbonate (EMC), or dimethyl carbonate (DMC) and a lithium salt such as LiPF₆ or LiBF₄.

In some embodiments, the first electrode plate 22 may be set to a positive electrode plate, and the second electrode plate 24 may be set as a negative electrode plate. The second electrode plate 24 may have a larger area than the first electrode plate 22.

The positive electrode plate may be formed in the geometry of a plate including aluminum (Al), and at least one surface of the positive electrode plate may be coated with a positive electrode active material such as a transition metal oxide. In some embodiments, the positive electrode plate may be provided on one side thereof with a positive electrode uncoated portion not coated with the positive electrode active material.

The negative electrode plate may be formed in the geometry of a plate made of copper (Cu) or nickel (Ni), and at least one surface of the negative electrode plate may be coated with a negative electrode active material such as graphite or carbon. In some embodiments, the negative electrode plate may be provided on one side thereof with a negative electrode uncoated portion not coated with the negative electrode active material. A space may be defined between both ends of the negative electrode plate in the longitudinal direction y and the case 30, which may increase the possibility of deformation of the case 30. In order to prevent such a deformation, the deformation prevention part 50 may be mounted on the outer side of the case 30.

The separator 26 may include polyethylene (PE) or polypropylene (PP). However, the disclosure is not limited thereto. The separator 26 may prevent electrical short circuit between the positive electrode plate and the negative electrode plate, and may allow only movement of lithium ions.

The case 30 may be formed in various geometries, so long as the case 30 is capable of accommodating the electrode assembly 20 therein. The case 30 may be a pouch using a soft film. In some embodiments, the case 30 may include a material other than a soft film. The pouch-type case 30 may be deformed by external force. In order to prevent deformation of the case 30, the deformation prevention part 50 may be mounted on the outer side of the case 30.

FIG. 2 is an exploded perspective view of the unit module 10 according to an embodiment of the present disclosure, and FIG. 3 is a coupled perspective view of the unit module 10 according to the embodiment of the present disclosure. As shown in FIGS. 2 and 3, an electrode lead 40 may be electrically connected to the electrode assembly 20, and may extend from one side or both sides of the case 30. A first electrode lead 42 may protrude from one side of the case 30 in the longitudinal direction y, and may be electrically connected to the first electrode plate 22 of the electrode assembly 20. A second electrode lead 44 may protrude from the other side of the case 30 in the longitudinal direction y, and may be electrically connected to the second electrode plate 24 of the electrode assembly 20. An insulating tape may be mounted between the electrode lead 40 and the case 30 to block the flow of current to the case 30.

The deformation prevention part 50 may be formed in various shapes, so long as the deformation prevention part 50 is capable of surrounding the periphery of the case 30 and suppressing deformation of the case 30. In some embodiments, the deformation prevention part 50 may include a first body part 60 and a first cover 70. In some embodiments, the deformation prevention part 50 may further include a first front cover 80 and a first rear cover 85. The length of the deformation prevention part 50 in the width direction x may be equal to or longer by a set length than the length of the case 30 in the width direction x.

The first body part 60 may be mounted in a shape covering the upper and lower sides of the case 30 and the side of the case 30 in the longitudinal direction y connected to the first electrode lead 42. The case 30 accommodating the electrode assembly 20 may be mounted in an upright state so that the electrode lead 40 faces in a lateral direction. The first body part 60 may be mounted in a shape covering the remaining portion of the periphery of the case 30 except the other side of the case 30 in the longitudinal direction y on which the first cover 70 is located. A difference between the length of the first body part 60 in the width direction x and the length of the case 30 in the width direction x may be within a predetermined error range. Because the first electrode lead 42 and the second electrode lead 44 protrude from both sides of the case 30 in the longitudinal direction y, the deformation prevention part 50 may have holes formed therein at positions corresponding to the first electrode lead 42 and the second electrode lead 44. In some embodiments, the first cover 70 may be provided so as to be easily separated from the first body part 60 in order to prevent the electrode lead 40 from being caught by the deformation prevention part 50 and thus interfering with mounting of the case 30 inside the deformation prevention part 50.

The first body part 60 may extend in a straight direction parallel to the upper and lower sides of the case 30 extending in the longitudinal direction y. In some embodiments, the first body part 60 may include a sidewall having a hole formed therein so as to allow the first electrode lead 42 to pass therethrough and having a concave shape covering one side of the case 30 in the longitudinal direction y. Because the first body part 60 has a geometry corresponding to that of the outer periphery of the case 30, the case 30 located inside the first body part 60 may be prevented from being deformed.

The first cover 70 may be formed in various geometries, so long as the first cover 70 is capable of covering the other side of the case 30 in the longitudinal direction y connected to the second electrode lead 44 and capable of being detachably mounted to the first body part 60. The first cover 70 may include a sidewall having a hole formed therein so as to allow the second electrode lead 44 to pass therethrough and having a concave shape covering the other side of the case 30 in the longitudinal direction y. The first cover 70 and the first body part 60 may be coupled to each other through various coupling methods such as hook coupling or screw coupling.

In some embodiments, the deformation prevention part 50 may include a first front cover 80 and a first rear cover 85. The first front cover 80 and the first rear cover 85 may have substantially the same geometry, and may be manufactured in the form of a film or a plate.

The first front cover 80 may be formed in various geometries, so long as the first front cover 80 is capable of being coupled to at least one of the first body part 60 or the first cover 70 and located on the front surface of the case 30. The first rear cover 85 may be formed in various geometries, so long as the first rear cover 85 is capable of being coupled to at least one of the first body part 60 or the first cover 70 and located on the rear surface of the case 30.

The first front cover 80 and the first rear cover 85 may include an insulative material. In some embodiments, the shapes of the first front cover 80 and the first rear cover 85 may correspond to the shape of the case 30.

The first front cover 80 and the first rear cover 85 may be manufactured in the form of a film or a plate having insulation and flame-retardant properties, and may include at least one of polyimide (PI), polyether ether ketone (PEEK), or polytetrafluoroethylene (PTFE). Polyimide (PI) is a material that maintains stable performance even at a high temperature and has thermal and electrical insulation properties, and thus may be widely used in high-temperature working environments or for batteries to which high voltage is applied. Polyether ether ketone (PEEK) is a high-performance plastic having very strong mechanical strength and chemical resistance, and is capable of withstanding high temperatures, thereby increasing the durability of the base portion. Polytetrafluoroethylene (PTFE), also known as Teflon^{®}, has excellent chemical stability and a low coefficient of friction.

In some embodiments, the first front cover 80 and the first rear cover 85 may include mica. Mica has excellent electrical insulation and thermal stability, and may serve as an additional protective layer due to high thermal resistance thereof when the battery overheats.

The first front cover 80 and the first rear cover 85 may be formed as a single layer. In other embodiments, the first front cover 80 and the first rear cover 85 may be composed of a plurality of layers as needed. The first front cover 80 and the first rear cover 85 may be manufactured in the form of a soft film. In some embodiments, the first front cover 80 and the first rear cover 85 may be manufactured in the form of a plate having high hardness as needed.

The deformation prevention part 50 may be manufactured of a foam-type tape or material, and may be in contact with at least one of the end portions of the case 30 in the longitudinal direction y and the lateral direction x that may be easily deformed. The deformation prevention part 50 may be easily used in pouch-type secondary batteries rather than can-type secondary batteries.

When the first cover 70 is separated from the first body part 60, the case 30 accommodating the electrode assembly 20 may be mounted inside the first body part 60 so that the first electrode lead 42 protrudes outside the first body part 60. In some embodiments, the configuration in which the electrode assembly 20 is mounted in the case 30 may be referred to as a secondary battery. After the secondary battery is mounted to the first body part 60, the first cover 70 may be secured to the first body part 60, thereby suppressing movement of the secondary battery.

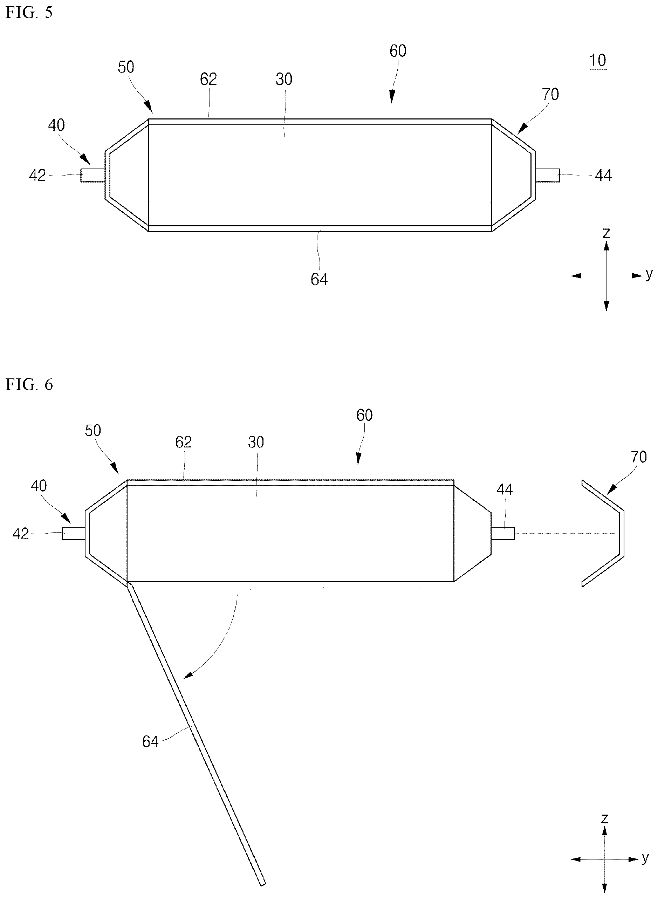

FIG. 5 is a front view showing the case 30 exposed forward in the unit module 10 according to the embodiment of the present disclosure, and FIG. 6 is a front view showing the first cover 70 and a first movable body 64 moved according to the embodiment of the present disclosure. In FIGS. 5 and 6, illustration of the first front cover 80 is omitted in order to clearly show the case 30. As shown in FIGS. 5 and 6, the first body part 60 may include a first fixed body 62 and a first movable body 64.

The first fixed body 62 may be formed in various geometries, so long as the first fixed body 62 is capable of covering the upper side of the case 30 and the side of the case 30 in the longitudinal direction y connected to the first electrode lead 42.

The first movable body 64 may be formed in various geometries, so long as the first movable body 64 is capable of hinged to the first fixed body 62 and capable of opening the lower side of the case 30. The first movable body 64 may be located under the case 30, and may extend in a horizontal direction. One side of the first movable body 64 may be hinged to the first fixed body 62, and the other side of the first movable body 64 may be detachably connected to the first cover 70. When the secondary battery mounted inside the deformation prevention part 50 is repaired or replaced, the first movable body 64 may be detached to allow the secondary battery including the case 30 to be withdrawn downward from the first body part 60.

The first movable body 64 may be hingedly mounted to the first fixed body 62. In some embodiments, the first movable body 64 and the first fixed body 62 may be separated from each other so as to be spaced apart from each other.

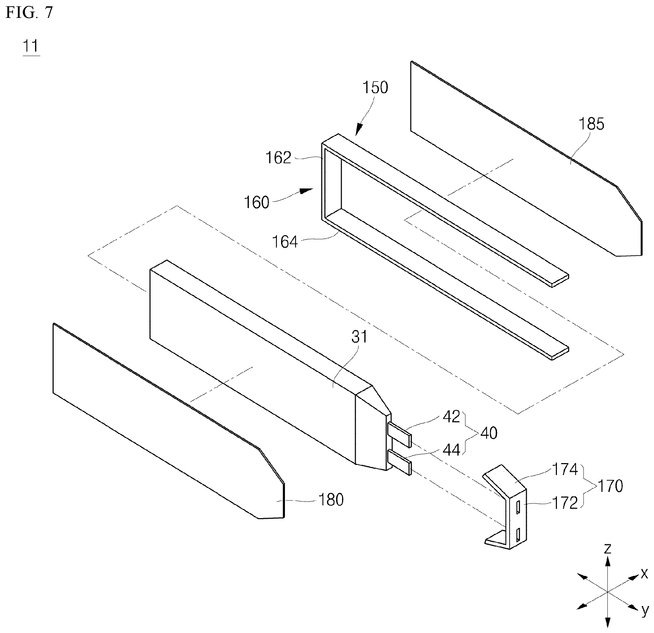

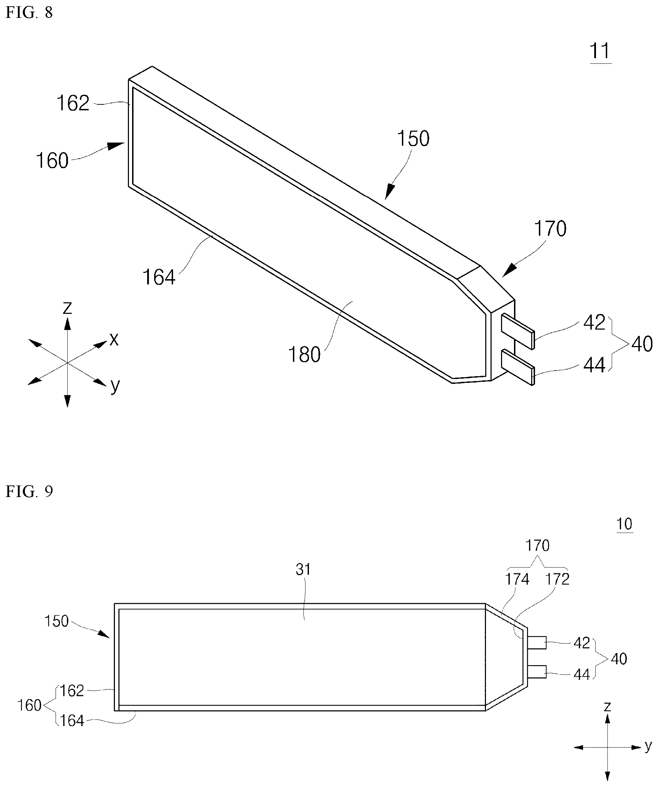

FIG. 7 is an exploded perspective view of a unit module 11 according to an embodiment of the present disclosure, and FIG. 8 is a coupled perspective view of the unit module 11 according to an embodiment of the present disclosure. As shown in FIGS. 7 and 8, the electrode lead 40 may be mounted only to one side of a case 31 in the longitudinal direction y. The geometry of a deformation prevention part 150 may correspond to the direction of the electrode lead 40.

In some embodiments, the electrode lead 40 may be mounted to the other side of the case 31 in the longitudinal direction y. The first electrode lead 42 may be electrically connected to the first electrode plate 22 and may protrude outside the case 31. The second electrode lead 44 may be electrically connected to the second electrode plate 24 and may protrude in the same direction as the first electrode lead 42.

The deformation prevention part 150 may be mounted in a geometry surrounding the periphery of the case 31, and the first electrode lead 42 and the second electrode lead 44 may protrude externally of the deformation prevention part 150. The deformation prevention part 150 may be formed in various geometries, so long as the deformation prevention part 150 is capable of suppressing deformation of the case 31. The deformation prevention part 150 may include a second body part 160 and a second cover 170. In some embodiments, the deformation prevention part 150 may include a second front cover 180 and a second rear cover 185.

The second body part 160 may be mounted in a shape covering the upper and lower sides of the case 31 and one side of the case 31 in the longitudinal direction y. The case 31 accommodating the electrode assembly 20 may be disposed in an upright state so that the electrode lead 40 faces in the lateral direction. The second body part 160 may be mounted in a geometry covering the remaining portion of the periphery of the case 31 except the other side of the case 31 in the longitudinal direction y on which the second cover 170 is located. The length of the second body part 160 in the lateral direction x and the length of the case 31 in the lateral direction x may be substantially equal to each other, or a difference therebetween may be within a predetermined error range. Because the first electrode lead 42 and the second electrode lead 44 protrude from one side of the case 31 in the longitudinal direction y, the deformation prevention part 150 may have holes formed therein at positions corresponding to the first electrode lead 42 and the second electrode lead 44. In some embodiments, the second cover 170 may be separated from the second body part 160 in order to prevent the electrode lead 40 from being caught by the deformation prevention part 150 and thus interfering with mounting of the case 31 inside the deformation prevention part 150.

The second body part 160 may include upper and lower frames extending in a straight direction parallel to the upper and lower sides of the case 31 extending in the longitudinal direction y, and the upper and lower frames may be connected to each other via a frame expending in the upward-downward direction so as to face one side of the case 31 in the longitudinal direction y.

Because the second body part 160 has a shape corresponding to the shape of the outer periphery of the case 31, the case 31 located inside the second body part 160 may be prevented from being deformed.

The second cover 170 may be formed in various geometries, so long as the second cover 170 is capable of covering the other side of the case 31 in the longitudinal direction y connected to the first and second electrode leads 42 and 44 and capable of being detachably mounted to the second body part 160. The second cover 170 may include a sidewall having holes formed therein so as to allow the first and second electrode leads 42 and 44 to pass therethrough and having a concave shape covering the other side of the case 31 in the longitudinal direction y. The second cover 170 and the second body part 160 may be coupled to each other through various coupling methods such as hook coupling or screw coupling.

The second cover 170 may include a cover body 172 and a wing member 174. The cover body 172 may have holes in which the first and second electrode leads 42 and 44 are located, and may extend in the vertical direction z. The cover body 172 may be mounted at a position facing the other side of the case 31 in the longitudinal direction y, and may extend in the vertical direction z.

The wing member 174 may be formed in various geometries, so long as the wing member 174 extends obliquely from each of the upper side and the lower side of the cover body 172 so as to be in contact with the second body part 160.

The second front cover 180 may be coupled to at least one of the second body part 160 or the second cover 170, and may be located on the front surface of the case 31. The second rear cover 185 may be coupled to at least one of the second body part 160 or the second cover 170, and may be located on the rear surface of the case 31. The second front cover 180 and the second rear cover 185 may include an insulative material. In some embodiments, the shapes of the second front cover 180 and the second rear cover 185 may correspond to the shape of the case 31.

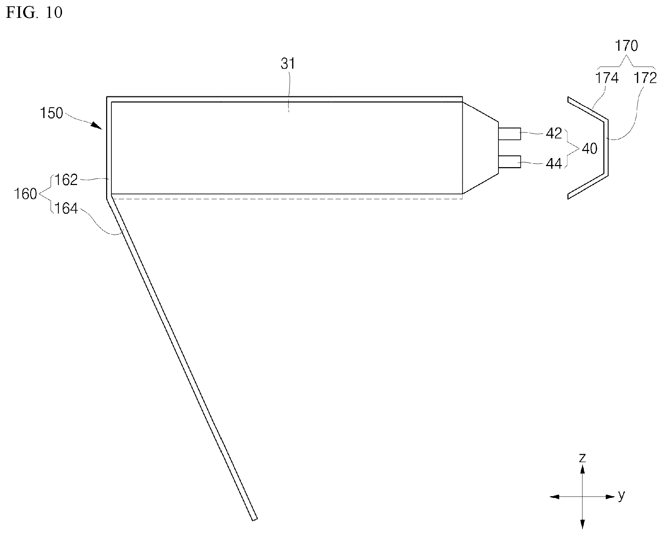

FIG. 9 is a front view showing the case 31 exposed forward in the unit module 11 according to an embodiment of the present disclosure, and FIG. 10 is a front view showing the second cover 170 and a second movable body 164 moved according to an embodiment of the present disclosure. In FIGS. 9 and 10, illustration of the second front cover 180 is omitted in order to clearly show the case 31. As shown in FIGS. 9 and 10, the second body part 160 may include a second fixed body 162 and a second movable body 164.

The second fixed body 162 may be formed in various geometries, so long as the second fixed body 162 is capable of covering the upper side of the case 31 and one side of the case 31 in the longitudinal direction y.

The second movable body 164 may be formed in various geometries, so long as the second movable body 164 is capable of being hinged to the second fixed body 162 and capable of opening the lower side of the case 31 through rotation thereof. The second movable body 164 may be located under the case 31, and may extend in the horizontal direction. One side of the second movable body 164 may be rotatably connected to the second fixed body 162, and the other side of the second movable body 164 may be detachably connected to the second cover 170. When the secondary battery is repaired or replaced, the second movable body 164 may be rotated downward to allow the secondary battery including the case 31 to be withdrawn downward from the second body part 160.

The second movable body 164 may be hingedly mounted to the second fixed body 162. In some embodiments, the second movable body 164 and the second fixed body 162 may be separated from each other so as to be spaced apart from each other.

As the positive electrode active material, a compound capable of reversibly intercalating/deintercalating lithium (e.g., a lithiated intercalation compound) may be used. In some embodiments, at least one of a composite oxide of lithium and a metal selected from cobalt, manganese, nickel, and combinations thereof may be used.

The composite oxide may include a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

In some embodiments, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may include aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may include silicon, a silicon-carbon composite, SiOx (0 < x < 2), a Si-based alloy, or a combination thereof.

The silicon-carbon composite may include a composite of silicon and amorphous carbon. According to an embodiment, the silicon-carbon composite may include a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

In some embodiments, the negative electrode active material layer may include about 90 wt% to about 99 wt% of a negative electrode active material, about 0.5 wt% to about 5 wt% of a binder, and about 0 wt% to about 5 wt% of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may act as a medium through which ions involved in the electrochemical reaction of the battery is capable of moving.

The non-aqueous organic solvent may include a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

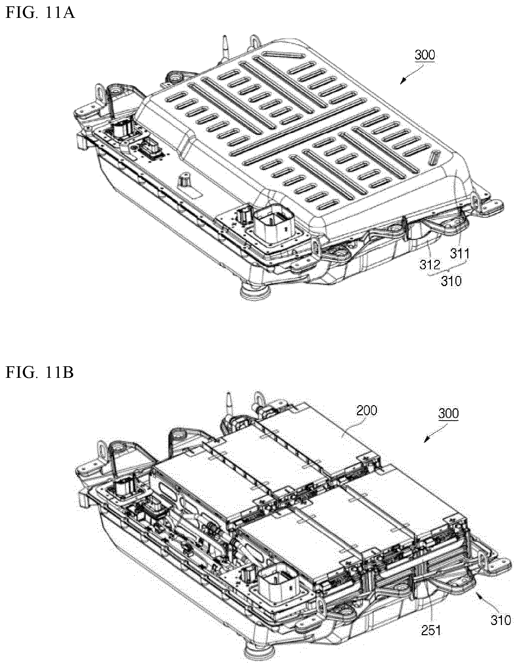

The batteries according to the above-described embodiments may be used to manufacture a battery pack. FIGS. 11A and 11B are perspective views showing a battery pack including the secondary battery according to an embodiment of the present disclosure. Referring to FIGS. 11A and 11B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 may be electrically connected to each other using a bus bar 251, and the plurality of battery modules 200 may be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 may be mounted on a vehicle. The vehicle may be, for example, an electric vehicle, a hybrid vehicle, or a plug-in hybrid vehicle. The vehicle can include both four-wheel and two-wheel vehicles.

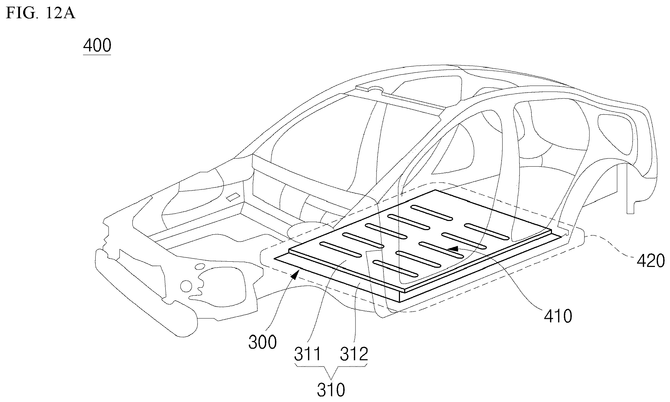

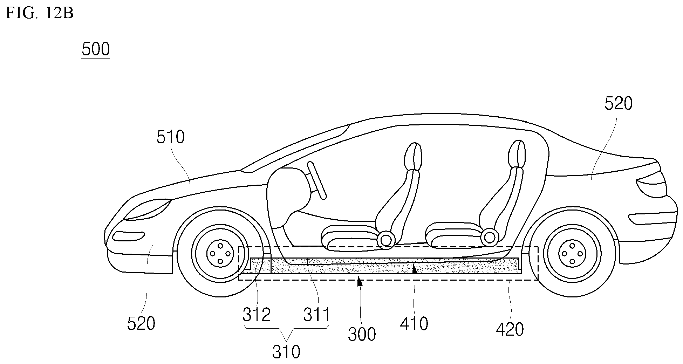

FIGS. 12A and 12B are, respectively, a perspective view and a side view showing vehicles 400 and 500 including the battery pack 300 according to an embodiment of the present disclosure.

In FIG. 12A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 may separate the interior and exterior of the vehicle, and the pack frame 312 may be positioned outside the vehicle.

As shown in FIG. 12B, the vehicle 500 may be assembled with additional components such as a hood 510 at the front of the vehicle body 400 and fenders 520 located at the front and rear of the vehicle. The vehicle 500 may include the battery pack 300 including the battery pack cover 311 and the pack frame 312, and the battery pack 300 may be coupled to the vehicle body part 400.

According to the present disclosure, a facing distance between internal components of a secondary battery may be kept uniform. Accordingly, the charging and discharging efficiency of the secondary battery may be improved, and the lifespan of the secondary battery may be prolonged.

According to the present disclosure, structural deformation of a case of a secondary battery may be effectively suppressed, and accordingly, the operational reliability and safety of the secondary battery may be improved.

However, the effects achievable through the present disclosure are not limited to those described above, and other technical effects not mentioned can be clearly understood by those skilled in the art from the description of the disclosure provided above.

Although a few embodiments of the present disclosure have been shown and described, it would be appreciated by those skilled in the art that various changes and modifications may be made in this embodiment without departing from the principles and technical idea of the disclosure.

## Claims

1. A battery module, comprising:
an electrode assembly (20) comprising a first electrode plate (22), a second electrode plate (24), and a separator (26);
a case (30) accommodating the electrode assembly (20); and
a deformation prevention part (50) having a substantially similar geometry to a periphery of the case (30), the deformation prevention part (50) surrounding the periphery of the case (30), thereby forming a unit module (10).

2. The battery module as claimed in claim 1, comprising a plurality of the unit modules (10), wherein the plurality of the unit modules (10) is consecutively arranged in a lateral direction.

3. The battery module as claimed in claim 2, further comprising:
a housing (190) accommodating the plurality of the unit modules (10), the housing (190) comprising two opposite open sides; and
two end covers (195) each coupled to each of the two opposite open sides, each of the two end covers (195) being electrically connected to the electrode assembly (20).

4. The battery module as claimed in any one of the preceding claims, wherein the case (30) is a soft film.

5. The battery module as claimed in any one of the preceding claims, further comprising:
a first electrode lead (42) protruding from one side of the case (30) in a longitudinal direction; and
a second electrode lead (44) protruding from an opposite side of the case (30) in the longitudinal direction.

6. A battery module, comprising:
an electrode assembly (20) comprising a first electrode plate (22), a second electrode plate (24), and a separator (26);
a case (31) accommodating the electrode assembly (20);
a first electrode lead (42) electrically connected to the first electrode plate (22) and protruding externally relative to the case (31);
a second electrode lead (44) electrically connected to the second electrode plate (24) and protruding in substantially a same direction relative to the first electrode lead (42); and
a deformation prevention part (150) having a substantially similar geometry to a periphery of the case (31), the deformation prevention part (150) surrounding the periphery of the case (31).

7. The battery module as claimed in claim 6, wherein the case (31) is located interior of the deformation prevention part (150), thereby forming a unit module (10).

8. The battery module as claimed in claim 6 or 7, wherein the deformation prevention part (150) comprises:
a second body part (160) covering an upper side and a lower side of the case (31) and one side of the case (31) in a longitudinal direction; and
a second cover (170) detachably mounted to the second body part (160), the second cover (170) covering an opposite side of the case (31) in the longitudinal direction connected to the first electrode lead (42) and the second electrode lead (44).

9. The battery module as claimed in claim 8, wherein the second cover (170) comprises:
a cover body (172) extending in a vertical direction and having holes allowing both the first electrode lead (42) and the second electrode lead (44) to pass through; and
a wing member (174) extending from an upper side or a lower side of the cover body, the wing member (174) in contact with the second body part (160).

10. The battery module as claimed in claim 8 or 9, wherein the deformation prevention part (150) further comprises:
a second front cover (180) coupled to the second body part (160) or the second cover, the second front cover (180) located on a front surface of the case (31); and
a second rear cover (185) coupled to the second body part (160) or the second cover, the second rear cover (185) located on a rear surface of the case (31).

11. The battery module as claimed in claim 10, wherein both the second front cover (180) and the second rear cover (185) comprise an insulative material.

12. The battery module as claimed in claim 10 or 11, wherein both the second front cover (180) and the second rear cover (185) have geometries corresponding to a geometry of the case (31).

13. The battery module as claimed in any one of the claims 8 to 12, wherein the second body part (160) comprises:
a second fixed body (162) covering the upper side of the case (31) and the one side of the case (31) in the longitudinal direction; and
a second movable body hingedly mounted to the second fixed body (162).

14. The battery module as claimed in any one of the claims 6 to 13, comprising a plurality of the unit modules (10), wherein the plurality of the unit modules (10) is consecutively arranged in a lateral direction.

15. The battery module as claimed in claim 14, further comprising:
a housing (190) accommodating the plurality of the unit modules (10), the housing (190) comprising an open side; and
an end cover (195) coupled to the open side, the end cover (195) electrically connected to the electrode assembly (20).
